# EUROPÄISCHE PATENTANMELDUNG

(11) **EP 1 526 058 A1**
(43) Veröffentlichungstag der Anmeldung: **27.04.2005**
(21) Anmeldenummer: 03103891.2
(22) Anmeldetag: 21.10.2003
(51) Int. Cl.: B62B 5/04, B65D 19/42

(54) **Transportwagen**

(71) Anmelder: Getrag Ford Transmissions GmbH, 50735 Köln (DE)
(72) Erfinder: Jablonski, Anton, 42665, Solingen (DE); Beckers, Anno Hermann, 50667, Köln (DE)
(74) Vertreter: Drömer, Hans-Carsten, Dr.-Ing.

(57) **Zusammenfassung**

Die Erfindung betrifft einen Transportwagen (10) zur Beförderung von Gegenständen, der mindestens drei Rollen (11) aufweist. Schwerere Gegenstände, die sich weiter weg vom Rand des Transportwagens (10) befinden, müssen mit großer Anstrengung von einem Bedienpersonal dem Transportwagen (10) bzw. den darauf aufgestapelten Behältern entnommen werden. Die Erfindung hat die Aufgabe den Transportwagen (10) dahingehend zu verbessern, daß der Entnahmevorgang von Gegenständen aus dem Transportwagen (10) ergonomisch günstiger wird. Deshalb weist der Transportwagen (10) erfindungsgemäß einen absenkbaren und anhebbaren Ständer (12) auf, der nach seiner Betätigung nur noch eine rotatorische Bewegung des Transportwagens (10) zuläßt. Die translatorische Bewegung des Transportwagens (10) wird durch den Reib- und Formschluß zwischen dem Ständer (12) und dem Hallenboden verhindert.

## Beschreibung

Die Erfindung betrifft einen Transportwagen zur Beförderung von Gegenständen, der mindestens drei Rollen aufweist.

Transportwagen erfüllen im Allgemeinen den Zweck, Gegenstände, wie beispielsweise Teile für die Produktion, von einem Ort an einen anderen Ort zu transportieren. Bisher sind die Transportwagen als Stahlgestelle ausgeführt, die eine bestimmte Anzahl von übereinander angeordneten Ablageflächen zur Aufnahme von Behältern aufweisen. Die Ablagefläche weist Vertiefungen auf, in welchen die Behälter in zwei oder in mehreren Reihen angeordnet sind. Größere und schwerere Teile sind jedoch für ein Bedienpersonal hinsichtlich der Ergonomie mühsam dem Transportwagen zu entnehmen. Wenn sich der aus dem Transportwagen herauszuhebende schwerere Gegenstand weiter weg vom Rand des Transportwagens befindet, wird der Rücken des Bedienpersonals durch diesen Vorgang stark beansprucht.

Die Erfindung hat die Aufgabe einen Transportwagen der eingangs genannten Art dahingehend zu verbessern, daß der Entnahmevorgang von Gegenständen aus dem Transportwagen ergonomisch günstiger wird.

Die Erfindung löst die gestellte Aufgabe durch einen Transportwagen der eingangs genannten Art, der erfindungsgemäß mit einem absenkbaren und anhebbaren Ständer ausgerüstet ist. Der Ständer kann für den Entnahmevorgang abgesenkt werden. Der abgesenkte Ständer dient dann als Drehpunkt, um den der Transportwagen herumgeschwenkt werden kann. Wenn das Bedienpersonal also von ihm weiter entfernte Gegenstände dem Transportwagen entnehmen möchte, kann es den Transportwagen um den abgesenkten Ständer herum zu sich hinschwenken. Dann muss das Bedienpersonal keine den Rücken anstrengende Bewegungen ausführen, um die schweren Gegenstände dem Transportwagen herunterzunehmen. Außerdem arretiert der Ständer den Transportwagen während des Entladens, so daß der Transportwagen beim Entnehmen der Gegenstände nicht wegrollen kann. Somit ist der erfindungsgemäße Transportwagen für die Ergonomie des Entladens vorteilhaft. Wenn der Entladevorgang beendet ist, wird der Ständer angehoben und der Transportwagen weitergeschoben.

Der Ständer kann dabei jede geeignete Form aufweisen, die geeignet ist, unterhalb des Transportwagens abgesenkt zu werden und den Transportwagen zu arretieren, z. B. kann der Ständer die Form eines Stempels aufweisen. Weiterhin kann der Ständer durch jeden geeigneten Antrieb abgesenkt werden, d. h. manuell, hydraulisch, pneumatisch, elektrische usw.

Wenn der Ständer unterhalb des Mittelpunkts einer Ablagefläche angeordnet ist, kann der Transportwagen von allen Seiten aus mit der gleichen Kraft um den Ständer herumgeschwenkt werden. Außerdem ist dann der Schwenkradius des Transportwagens minimal.

Die für das Herumschwenken des Transportwagens erforderliche Kraft wird zusätzlich minimiert, wenn jede der Rollen einzeln lenkbar ist. Die Rollen können sich dann wie bei einem Einkaufswagen individuell entsprechend der Schubrichtung verstellen. Der Transportwagen kann dann in jede gewünschte Richtung geschoben und während des Schwenkvorganges auch um seine eigene Achse gedreht werden.

Wenn die Ablagefläche des Transportwagens quadratisch ist, ist der für das Herumschwenken erforderliche Schwenkradius ebenso minimiert. Prinzipiell ist der Transportwagen mit beliebigem Grundriß gestaltbar, d. h. recheckig, n-eckig, rund oder oval.

Ebenfalls ergonomisch vorteilhaft ist es, wenn der Ständer mit einem Fußpedal bedient werden kann. Der Ständer kann dann durch ein erstes Herunterdrücken des Fußpedals abgesenkt und durch ein zweites Herunterdrücken des Fußpedals angehoben werden. Dabei kann ein Fußpedal oder mehrerer am Transportwagen angeordnet sein. Zusätzlich oder statt Fußpedale können auch Handbetätigungseinrichtungen zum Absenken bzw. Anheben des Transportwagens vorgesehen sein.

In einer bevorzugten Ausführungsform kann der Ständer zwei gegenüberliegende Metallplatten aufweisen, in denen eine Führungsnut zur Führung eines zwischen den beiden Metallplatten angeordneten Bolzens vorgesehen ist, wobei der Bolzen mit dem Fußpedal verbunden ist. Somit kann der Bolzen mit dem Fuß in der Führungsnut bewegt werden.

Die Führungsnut kann in der Weise ausgebildet sein, daß der Bolzen nur in einer Richtung entlang der Führungsnut bewegt werden kann. Durch diese Gestaltung der Führungsnut ist es möglich den Ständer beim ersten Herunterdrücken zu senken und beim zweiten Herunterdrücken anzuheben.

Der Ständer kann an seinem dem Boden zugewandten Ende ein Gummielement aufweisen. Dadurch kann der Ständer im abgesenkten Zustand besser am Boden haften, so daß der Transportwagen dann zuverlässig arretiert ist. Durch den hohen Reibschluß wird die translatorische Bewegung des Transportwagens unterbunden, es ist nur die vorgesehene Drehbewegung möglich.

In einer Weiterbildung der Erfindung ist der Transportwagen stapelbar. Dann können mehrere Transportwagen aufeinander gestapelt werden. Dies kann aus Platzgründen sehr praktisch sein.

Um auf dem Transportwagen Gestelle oder andere Transportwagen gut stapeln zu können, kann er in seinen Eckbereichen Pfosten aufweisen.

Wenn der Transportwagen in seinen unteren Eckbereichen mit Ausnehmungen versehen ist, dann kann er sicher auf den in den Eckbereichen angebrachten Pfosten anderer Transportwagen oder anderer Gestelle gestapelt werden.

Damit die Transportwagen und Gestelle kippsicher aufeinandergestapelt werden können, können die Ausnehmungen abgeschrägte Flächen aufweisen, wobei sich die Ausnehmungen von unten nach oben verjüngen. Die abgeschrägten Flächen zentrieren dann das zu stapelnde Gestell beim Aufsetzen auf die Pfosten in der Mitte die Transportwagens.

Um Verletzungen des Bedienpersonals zu vermeiden, kann der Transportwagen in Fahrtrichtung an seinen Stirnseiten einen Schutz für die Füße des Bedienpersonals aufweisen. Außerdem kann dieser Schutz den Transportwagen versteifen.

Der Transportwagen, der mit schweren Gegenständen beladen werden kann, kann zu seiner Versteifung an seiner Unterseite quer zur Fahrtrichtung verlaufende Hohlprofile aufweisen. Außerdem kann ein Gabelstapler mit seiner Gabel in die Hohlprofile eingreifen, um den Transportwagen anzuheben oder während des Beladevorgangs festzuhalten. Ferner ist es möglich die Hohlprofile über Stangen eines Regallagers zu schieben, so daß der Transportwagen bis zu seinem Gebrauch platzsparend aufbewahrt werden kann.

Die Rollen des Transportwagens können aus Polyurethan gefertigt sein, um den Transportwagen mit einer minimalen Kraft sehr laufruhig über den Boden schieben zu können. Natürlich können die Rollen auch aus einem anderen dem Fachmann bekannten Material gefertigt sein, das dieselben Eigenschaften aufweist.

Nachfolgend wird ein Ausführungsbeispiel anhand der beiliegenden Zeichnung näher erläutert.

Im Einzelnen zeigen:
- Fig. 1: eine perspektivische Ansicht unter einen Transportwagen;
- Fig. 2: eine perspektivische Ansicht auf den Transportwagen aus Fig. 1;
- Fig. 3: eine perspektivische Detailansicht auf einen Teilbereich der Bedienungsmechanik des Ständers des Transportwagens aus Fig. 1;
- Fig. 4: eine perspektivische Draufsicht auf eine Steuerkulisse des Ständers.

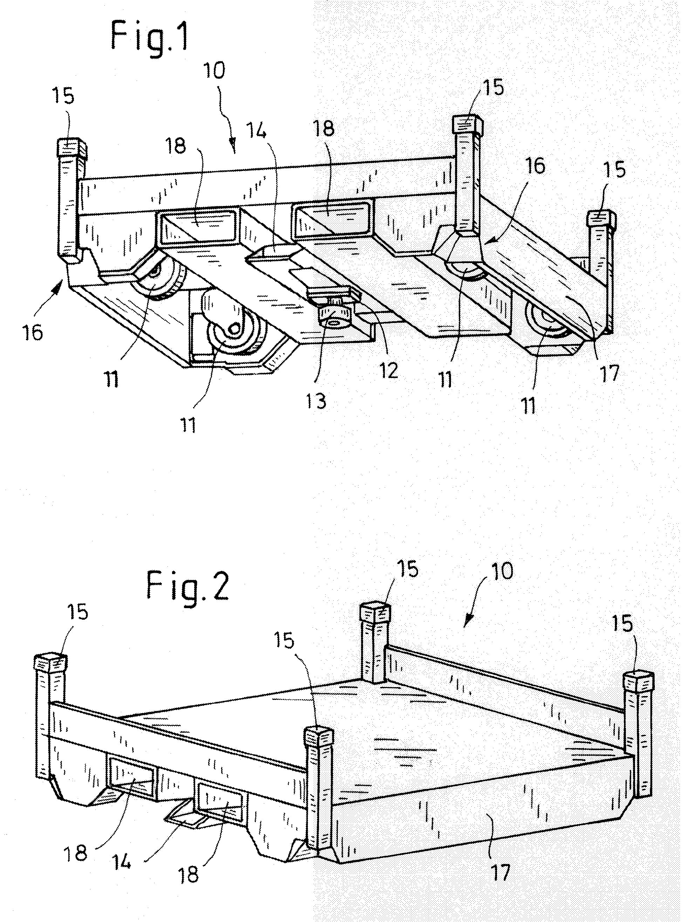

Fig. 1 zeigt einen Transportwagen 10, der mit lenkbaren Rollen 11 über einen Boden geschoben werden kann. In der Mitte des Transportwagens 10 befindet sich ein Ständer 12 in der Form eines Stempels, der ein Gummielement 13 aufweist. Der Ständer 12 kann beliebig mit einem der beiden gegenüberliegenden Fußpedale 14 abgesenkt und angehoben werden. Wenn der Ständer 12 auf den Boden abgesenkt wird, kann der Transportwagen 10 während eines Entladevorgangs nicht wegrollen. Der abgesenkte Ständer 12 dient außerdem als Drehpunkt, um den der Transportwagen 10 herumgeschwenkt werden kann. Wenn ein Bedienpersonal vom Transportwagen 10 einen Gegenstand entnehmen möchte, der auf dem Transportwagen 10 weiter hinten abgelegt ist, dann kann es den Transportwagen 10 um den abgesenkten Ständer 12 herum zu sich hinschwenken, sodaß der zu entnehmende Gegenstand leicht zu ergreifen ist. Nach dem Entladen des Transportwagens 10 kann der Ständer 12 mit einem beliebigen Fußpedal 14 angehoben werden. Um den Transportwagen 10 mit einer minimalen Kraft herumschwenken zu können, kann jede Rolle 11, wie bei einem Einkaufswagen individuell in die Richtung gelenkt werden, in die der Transportwagen 10 geschoben wird. Die Rollen 11 können sich folglich von selbst entsprechend der gewünschten Schubrichtung einstellen.

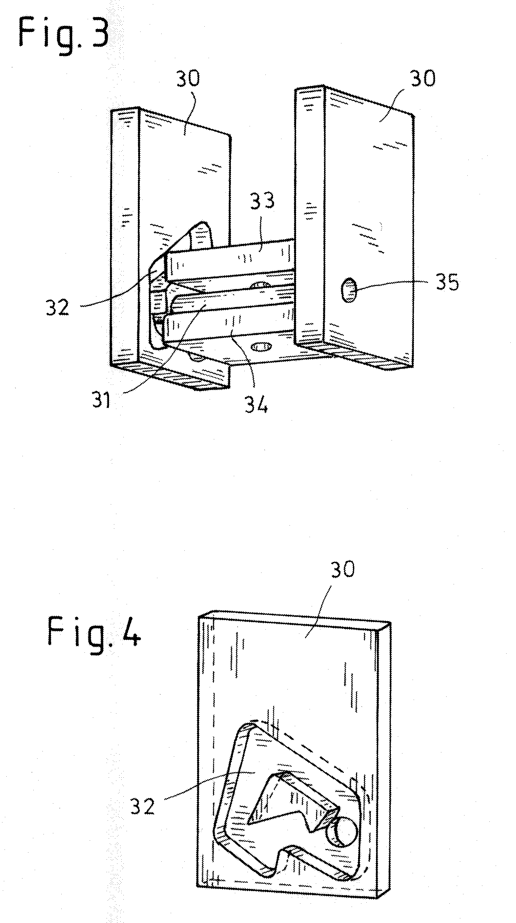

Der Ständer 11 weist zwei gegenüberliegende Metallplatten 33 auf (siehe Fig. 3). Zwischen den Metallplatten 30, die am Rahmen des Transportwagens 10 befestigt sind, ist ein Bolzen 31 mit seinen beiden Enden in einer in den Metallplatten 30 eingearbeiteten Führungsnut 32 geführt (siehe Figuren 3 und 4). Die Führungsnut 32 ist in der Weise ausgebildet, daß sich der Bolzen 31 beim Herunterdrücken des Fußpedals 14 immer nur in einer Richtung entlang der Führungsnut 32 bewegen kann. Durch diese besondere Gestaltung der Führungsnut 32 kann der Ständer 12 beim ersten Herunterdrücken des Fußpedals 14 abgesenkt und beim zweiten Herunterdrücken des Fußpedals 14 angehoben werden. Der Bolzen 31 ist zwischen zwei Platten 33 und 34 angeordnet. Die untere Platte 34 kann mit dem Gummielement 13 verbunden sein. Die obere Platte 33 kann mit einer hier nicht gezeigten Druckfeder verbunden sein, die den Ständer zum Anheben nach oben zieht. In mindestens einer der Metallplatten 30 ist eine Öffnung 35 vorgesehen, durch die der Bolzen 31 bei seiner Montage geschoben wird, um ihn zwischen den Metallplatten 30 zu positionieren.

Der Transportwagen 10 weist vier Pfosten 15 auf (siehe Fign. 1 und 2). Außerdem weist er unterhalb der Pfosten 15 Ausnehmungen 16 auf, die Pfosten eines anderen Transportwagens 10 oder Gestells aufnehmen können. Somit können mehrere Transportwagen 10 oder Gestelle auf einem unteren Transportwagen 10 gestapelt werden. Um mehrere Transportwagen 10 oder Gestelle kippsicher aufeinanderstapeln zu können, sind die Ausnehmungen 16 mit schrägen Flächen versehen, sodaß sich die Ausnehmungen 16 von unten nach oben verjüngen. Durch die abgeschrägten Flächen kann das zu stapelnde Gestell beim Aufsetzen auf die Pfosten 15 in die Mitte des Transportwagens 10 zentriert werden.

Der Transportwagen 10 ist mit einem Schutz 17 ausgestattet (siehe Fign. 1 und 2), der nur einen geringen Abstand zum Boden aufweist, so daß das Bedienpersonal nicht mit seinen Füßen unter den Transportwagen 10 gelangen kann. Der Schutz 16 versteift den Transportwagen 10 auch. Außerdem ist der Transportwagen 10 mit Hohlprofilen 18 ausgerüstet, die ihn zusätzlich versteifen. Ferner kann ein Gabelstapler mit seiner Gabel in die Hohlprofile 18 eingreifen, um den Transportwagen 10 anzuheben oder während des Beladevorganges Platz für die Laufzinken eines Gabelhubwagens zu bieten. Es ist jedoch auch möglich, daß der Transportwagen 10 zu seiner Aufbewahrung mit den Hohlprofilen 18 über Stangen eines Regallagers geschoben wird.

### BEZUGSZEICHENLISTE

- 10: Transportwagen
- 11: Rolle
- 12: Ständer
- 13: Gummielement
- 14: Fußpedal
- 15: Pfosten
- 16: Ausnehmung
- 17: Schutz
- 18: Hohlprofile

- 30: Metallplatte
- 31: Bolzen
- 32: Führungsnut
- 33: obere Platte
- 34: untere Platte
- 35: Öffnung

## Patentansprüche

1. Transportwagen (10) zur Beförderung von Gegenständen, der mindestens drei Rollen (11) aufweist,
**dadurch gekennzeichnet, daß** er mit einem absenkbaren und anhebbaren Ständer (12) ausgerüstet ist.

2. Transportwagen (10) nach Anspruch 1,
**dadurch gekennzeichnet, daß** der Ständer (12) unterhalb des Mittelpunkts einer Ablagefläche angeordnet ist.

3. Transportwagen (10) nach Anspruch 1 oder 2,
**dadurch gekennzeichnet, daß** jede der Rollen (11) lenkbar ist.

4. Transportwagen (10) nach Anspruch 2 oder 3,
**dadurch gekennzeichnet, daß** die Ablagefläche quadratisch ist.

5. Transportwagen (10) nach einem der Ansprüche 1 bis 4,
**dadurch gekennzeichnet, daß** der Ständer (11) mit einem Fußpedal (14) bedienbar ist.

6. Transportwagen (10) nach einem der Ansprüche 1 bis 5,
**dadurch gekennzeichnet**, daßderStänder(11)durcheinerstes Herunterdrücken des Fußpedals (14) absenkbar und durch ein zweites Herunterdrücken des Fußpedals (14) anhebbar ist.

7. Transportwagen (10) nach Anspruch 5 oder 6,
**dadurch gekennzeichnet, daß** der Ständer (11) zwei gegenüberliegende Metallplatten (30) aufweist, in denen eine Führungsnut (32) zur Führung eines zwischen den beiden Metallplatten (30) angeordneten Bolzens (31) vorgesehen ist, und der Bolzen (31) mit dem Fußpedal (14) verbunden ist.

8. Transportwagen (10) nach Anspruch 7,
**dadurch gekennzeichnet, daß** die Führungsnut (32) in der Weise ausgebildet ist, daß der Bolzen (31) nur in einer Richtung entlang der Führungsnut (32) bewegbar ist.

9. Transportwagen (10) nach einem der Ansprüche 1 bis 8,
**dadurch gekennzeichnet**, daßderStänder(11)anseinemdem Boden zugewandten Ende ein Gummielement (13) aufweist.

10. Transportwagen (10) nach einem der Ansprüche 1 des 9,
**dadurch gekennzeichnet**, daßerstapelbarist.

11. Transportwagen (10) nach Anspruch 10,
**dadurch gekennzeichnet, daß** er in seinen Eckbereichen Pfosten (15) aufweist.

12. Transportwagen (10) nach Anspruch 10 oder 11,
**dadurch gekennzeichnet, daß** er in seinen unteren Eckbereichen Ausnehmungen (16) aufweist.

13. Transportwagen (10) nach Anspruch 12,
**dadurch gekennzeichnet, daß** die Ausnehmungen (16) abgeschrägte Flächen aufweisen, sodaß sich die Ausnehmungen (16) von unten nach oben verjüngen.

14. Transportwagen (10) nach einem der Ansprüche 1 bis 13,
**dadurch gekennzeichnet, daß** er in Fahrtrichtung an seinen Stirnseiten einen Schutz (17) für die Füße des Bedienpersonals hat.

15. Transportwagen (10) nach einem der Ansprüche 1 bis 14,
**dadurch gekennzeichnet, daß** er an seiner Unterseite quer zur Fahrtrichtung verlaufende Hohlprofile (18) aufweist.

16. Transportwagen (10) nach einem der Ansprüche 1 bis 15,
**dadurch gekennzeichnet, daß** die Rollen (11) aus Polyurethan gefertigt sind.
